# EUROPÄISCHE PATENTSCHRIFT

(11) **EP 0 759 325 B1**
(45) Veröffentlichungstag und Bekanntmachung des Hinweises auf die Patenterteilung: **07.11.2001**
(21) Anmeldenummer: 96113149.7
(22) Anmeldetag: 16.08.1996
(51) Int. Cl.: B01J 49/00, C02F 1/42

(54) **Verfahren und Einrichtung zum Regenerieren einer nach dem Ionenaustauscherprinzip arbeitenden Wasseraufbereitungsanlage**
Process and device for regenerating an installation of water treatment according to the ion exchange principle
Procédé et dispositif pour régénérer une installation de traitement d'eau selon le principe d'échange d'ions

(30) Priorität: 18.08.1995 DE 19530383
(43) Veröffentlichungstag der Anmeldung: 26.02.1997
(73) Patentinhaber: BWT Wassertechnik GmbH, 69198 Schriesheim (DE)
(72) Erfinder: Dobrocsi, Bela, 69469 Weinheim (DE); Wacker, Karl-Fiedrich, 68723 Plankstadt (DE)
(74) Vertreter: Wolf, Eckhard, Dr.-Ing.

(56) Entgegenhaltungen:
- DE-A- 2 054 028
- DE-A- 3 443 026
- US-A- 3 130 154
- US-A- 3 432 038
- US-A- 3 891 552

## Beschreibung

Die Erfindung betrifft ein Verfahren zum Regenerieren einer nach dem Ionenaustauscherprinzip arbeitenden Wasseraufbereitungsanlage, bei dem Sole mittels eines Injektors über ein Steuerventil aus einem Salzlösebehälter abgesaugt wird, wobei die Sole mit dem Treibwasser vermischt und dadurch verdünnt wird, die verdünnte Sole einem mit Ionenaustauscherharz gefüllten Ionenaustauscher der Wasseraufbereitungsanlage zugeführt wird, der Ionenaustauscher anschließend mit reinem Wasser gespült und/oder im Gegenstrom rückgespült wird, und Nachfüllwasser in den Salzlösebehälter gefüllt wird.

Die Erfindung betrifft weiter eine Einrichtung zur Steuerung des Regenerierungsbetriebes einer mindestens einen Ionenaustauscher umfassenden Wasseraufbereitungsanlage, mit einem von Treibwasser durchströmbaren Injektor, an dessen Injektionseingang ein einen begrenzten Vorrat gesättigter Sole enthaltender Salzlösebehälter anschließbar ist, durch deren Mischung mit dem den Injektor durchströmenden Treibwasser die für den Regenerierungsbetrieb des Ionenaustauschers benötigte verdünnte Sole gewonnen wird und mit einem als Umschaltventil ausgebildeten Steuerventil, das aus einer dem Regenerierungsbetrieb zugeordneten Grundstellung, in der der Salzlösebehälter mit dem Injektionseingang verbunden, jedoch gegen einen unter definiertem Druck, der höher ist als der Druck im Salzlösebehälter, stehende Nachfüllwasserleitung abgesperrt ist, in eine dem Nachfüllbetrieb des Salzlösebehälters zugeordnete Funktionsstellung umschaltbar ist, in der der Injektionseingang gegen den Salzlösebehälter abgesperrt, dieser jedoch mit der Nachfüllwasserleitung verbunden ist.

Bei nach dem Ionenaustauscherprinzip arbeitenden Wasseraufbereitungsanlagen mit einem oder mehreren Ionenaustauschern muß das in diesen enthaltene Ionenaustauscherharz in regelmäßigen Zeitabständen regeneriert werden. Dies geschieht durch Befüllen des Ionenaustauschers mit einer Salzlösung (Sole), wobei in der Regel Kochsalz (NaCl) zur Bildung der Sole verwendet wird. Die Sole wird dabei in einem einen Salzvorrat enthaltenden Salzlösebehälter gebildet und bis zur Entnahme gespeichert. Nach der Beaufschlagung des Ionenaustauschers mit der Sole - der eigentlichen Regeneration - wird überschüssiges Salz mit Leitungswasser ausgewaschen und es erfolgt meist auch noch eine Rückspülung im Gegenstrom, um das Harzbett aufzulockern und eventuell vorhandene Schwebeteilchen zu entfernen. Danach steht der Ionenaustauscher wieder zur Behandlung von Rohwasser bereit. Zusätzlich muß die dem Salzlösebehälter entnommene Solemenge durch Zuführung einer entsprechenden Menge an Nachfüllwasser ersetzt werden, so daß sich durch Anlösen des Salzvorrats erneut konzentrierte Sole bilden kann.

Bei einem bekannten Verfahren der eingangs beschriebenen Art werden die genannten Verfahrensschritte nacheinander ausgeführt, d.h. das Einfüllen des Nachfüllwassers in den Salzlösebehälter geschieht erst, nachdem das Ausspülen der Salzreste aus dem Ionenaustauscher und das Rückspülen des Ionenaustauschers stattgefunden haben. Da die Entnahme der Sole aus dem Salzlösebehälter bereits nach dem Besalzen des Ionenaustauschers abgeschlossen ist und das Einfüllen des Nachfüllwassers in den Salzlösebehälter etwa 30 Minuten dauert und die Bildung neuer Sole in dem Salzlösebehälter zusätzliche Zeit beansprucht, bedeutet eine derartige Vorgehensweise einen erheblichen Zeitverlust bis eine neuerliche Regeneration eines Ionenaustauschers vorgenommen werden kann. Aus diesem Grund werden in bestehenden Wasseraufbereitungsanlagen häufig überdimensionierte Salzlösebehälter und Ionenaustauscher eingesetzt.

Aufgabe der Erfindung ist es daher, ein Verfahren und eine Einrichtung der eingangs angegebenen Art zu entwickeln, womit auf einfache Weise die Taktzeiten der Regenerationszyklen reduziert werden können.

Zur Lösung dieser Aufgabe werden die in den Patentansprüchen 1 und 12 angegebenen Merkmalskombinationen vorgeschlagen. Vorteilhafte Ausgestaltungen und Weiterbildungen der Erfindung ergeben sich aus den Unteransprüchen.

Der erfindungsgemäßen Lösung liegt im wesentlichen der Gedanke zugrunde, daß das Nachfüllwasser unmittelbar im Anschluß an das Absaugen der für den Regenerationsvorgang benötigten Solemenge aus dem Salzlösebehälter während des Auswaschens und/oder Rückspülens des Ionenaustauschers in den Salzlösebehälter eingefüllt wird. Hierdurch wird die zum Auswaschen von Salzrückständen aus dem Ionenaustauscher und/oder zum Rückspülen des Ionenaustauschers benötigte Zeit in vorteilhafter Weise zum Einfüllen des Nachfüllwassers in den Salzlösebehälter genutzt.

Bei einer bevorzugten Ausgestaltung des Verfahrens wird das Nachfüllwasser durch die gleiche Leitung in den Salzlösebehälter gefüllt, über die die Sole abgesaugt wird. Dies wird dadurch ermöglicht, daß während der Auswasch- und Rückspülphase die Leitung für die Sole bereits frei ist, so daß durch eine geeignete Umsteuerung innerhalb des Steuerventils das Nachfüllwasser über die Soleleitung in den Salzlösebehälter eingefüllt werden kann. Gleichzeitig wird hierdurch die Soleleitung von Salzrückständen befreit, so daß ein Verstopfen der Leitung ausgeschlossen ist.

Eine Steigerung des Wirkungsgrades der Wasseraufbereitungsanlage und eine Vermeidung von Kontamination des Steuerventils und des Leitungssystems wird bei einer vorteilhaften Weiterbildung des Verfahrens dadurch erreicht, daß in einer zwei parallel zueinander angeordnete, jeweils abwechselnd arbeitende Ionenaustauscher aufweisenden Wasseraufbereitungsanlage von dem jeweils sich in Betrieb befindlichen Ionenaustauscher behandeltes Wasser als Treibwasser für den Injektor, für das Auswaschen des zu regenerierenden Ionenaustauschers, für das Nachfüllen des Salzlösebehälters und für das Rückspülen des zu regenerierenden Ionenaustauschers verwendet wird.

Bei der erfindungsgemäßen Einrichtung wird zur Lösung der Erfindungsaufgabe vorgeschlagen,
a) daß das Steuerventil als druckgesteuertes Ventil ausgebildet ist, das durch Druckerniedrigung in einer an den Injektionseingang angeschlossenen Steuerkammer umschaltbar ist, die
b) durch einen gegenüber dem Ventilgehäuse abgedichteten, in diesem entlang einer zentralen Gehäuseachse hin- und herverschiebbaren Steuerkolben beweglich gegen eine Eingangskammer des Ventils abgesperrt ist, an die der Salzlösebehälter direkt und die Nachfüllwasserleitung über ein 2/2-Wege-Sitzventil angeschlossen ist, dessen Ventilkörper durch einen mit dem Steuerkolben fest verbundenen Dichtkörper gebildet ist, der durch die Vorspannung einer an dem Steuerkolben angreifenden Ventilfeder in dichtende Anlage mit dem die Mündungsöffnung eines mit der Nachfüllwasserleitung in Verbindung stehenden Gehäusekanals berandenden Ventilsitz drängbar ist,
c) daß der Steuerkolben mit einem sich zwischen einer steuerkammerseitigen und einer eingangskammerseitigen Mündungsöffnung erstreckenden Durchgangskanal versehen ist
d) und daß ein auf den Füllstand des Salzlösebehälters oder der Eingangskammer des Steuerventils ansprechendes Sensorventil vorgesehen ist, das bei Unterschreiten eines Mindestbetrages des jeweiligen Füllstandes in eine den Durchgangskanal des Steuerkolbens sperrende Funktionsstellung gelangt und in dieser bleibt, solange der Injektor von Treibwasser durchströmt ist.

Das erfindungsgemäße Ventil ermöglicht ein selbständiges Umschalten zwischen dem Besalzen des Ionenaustauschers, d.h. der Entnahme von Sole aus dem Salzlösebehälter, und dem Einfüllen von Nachfüllwasser in den Salzlösebehälter, wobei als Steuergröße der Füllstand des Salzlösebehälters oder der Eingangskammer des Steuerventils herangezogen wird. Zum Besalzen des Ionenaustauschers wird eine vorbestimmte Solemenge aus dem Salzlösebehälter mittels des nach dem Wasserstrahlpumpenprinzip arbeitenden Injektor abgesaugt. Wenn die vorbestimmte Solemenge entnommen worden ist, wird dies von dem Sensorventil registriert. Dies kann beispielsweise dadurch geschehen, daß die Entnahmevorrichtung in dem Salzösebehälter derart angeordnet ist, daß nach Entnahme der vorbestimmten Solemenge keine Sole, sondern Luft angesaugt wird. Das Ansprechen des Sensorventils bewirkt ein Umschalten des Steuerventils aus der dem Regenerierungsbetrieb zugeordneten Grundstellung in die dem Nachfüllbetrieb des Salzlösebehälters zugeordnete Funktionsstellung, in der das 2/2-Wege-Sitzventil der Nachfüllwasserleitung auf Durchgang geschaltet wird, so daß Nachfüllwasser in den Salzlösebehälter strömen kann. Das Umschalten des Steuerventils geschieht dabei durch Erzeugung eines Unterdrucks in der Steuerkammer mittels des Injektors, sobald das Sensorventil in seine den Durchgangskanal des Steuerkolbens sperrende Funktionsstellung gelangt ist. Diese Schaltstellungen des Steuerventils, d.h. des Sensorventils und des Sitzventils der Nachfüllwasserleitung, werden so lange beibehalten, bis die zuvor aus dem Salzlösebehälter entnommene Solemenge durch Nachfüllwasser ersetzt ist und bis das Auswaschen von Salzrückständen aus dem Ionenaustauscher beendet ist.

In einer bevorzugten Ausführungsform ist das Sensorventil als Kugelsitzventil ausgebildet, dessen Ventilsitz durch einen konischen Rand der eingangskammerseitigen Mündungsöffnung des Durchgangskanals des Steuerkolbens gebildet ist. Dann sollte für das Steuerventil zweckmäßig eine Montageposition vorgesehen sein, in der der Durchgangskanal des Steuerkolbens mit nach oben weisenden - vorzugsweise lotrechtem - Verlauf in die Eingangskammer des Ventils mündet, während die Ventilkugel des Sensorventils als Schwimmkörper ausgebildet ist, der im Gehäuse entlang einer koaxial oder annähernd koaxial mit der zentralen Achse des Mündungsabschnittes des Durchgangskanals verlaufenden Achse geführt beweglich ist. Während des Absaugens der Sole aus dem Salzlösebehälter ist die Eingangskammer des Steuerventils mit Flüssigkeit gefüllt, so daß die als Schwimmkörper ausgebildete Ventilkugel durch ihre Auftriebskraft von ihrem Ventilsitz gelöst ist. Sobald die vorbestimmte Solemenge aus dem Salzlösebehälter entnommen worden ist, wird aus diesem Luft angesaugt. Dadurch sinkt der Füllstand in der Eingangskammer des Ventils ab, bis sich die Ventilkugel auf ihren Ventilsitz setzt und das Steuerventil umgeschaltet wird.

Der eingangskammerseitige Mündungsabschnitt des Durchgangskanals des Steuerkolbens schließt vorzugsweise rechtwinklig an einen steuerkammerseitigen Mündungsabschnitt des Durchgangskanals an, wobei dieser steuerkammerseitige Mündungsabschnitt koaxial zur zentralen Längsachse des Ventilgehäuses angeordnet ist.

Das 2/2-Wege-Sitzventil, über das die Nachfüllwasserleitung an die Eingangskammer des Steuerventils anschließbar ist, kann als Teller-Sitzventil ausgebildet sein. Der Sitz des Teller-Sitzventils ist dann vorzugsweise durch die schmale Ringstirnfläche einer außenkonischen, in die Einlaßkammer hineinragenden Rippe gebildet, während der Ventilkörper des Teller-Sitzventils als elastische Kreisscheibe ausgebildet ist, die in eine flach-topfförmige Vertiefung des einlaßkammerseitigen Endabschnitts des Steuerkolbens eingesetzt ist.

Zur beweglich dichten Abgrenzung der Steuerkammer und der Eingangskammer des Steuerventils gegeneinander ist vorzugsweise eine ringscheibenförmige Membran aus nachgiebigem Kunststoffmaterial vorgesehen, deren radial äußerer Rand zwischen einer innenradialen Stufe des Ventilgehäuses und einem in dieses eingesetzten Klemmkörper an der Ringschulter dicht anliegend eingeklemmt ist und deren radial innerer Rand zwischen einem radialen Stützflansch des Steuerkolbens und einem an diesem schraubbar geführten Klemmring an dem Stützflansch dichtend anliegend eingespannt ist, wobei der radiale Stützflansch des Steuerkolbens in einem radialen lichten Abstand vom inneren Rand der Gehäuseschulter verläuft.

Der maximale Öffnungshub des 2/2-Wege-Sitzventils sollte durch Anschlagwirkung zwischen dem Steuerkolben und dem Gehäuse oder eines mit diesem fest verbundenen Anschlagstückes auf einen Wert begrenzt sein, der zwischen 1/5 und 1/3 der radialen Weite des zwischen dem inneren Rand der Gehäuse-Ringschulter und dem äußeren Rand des Stützflansches des Steuerkolbens verbleibenden, durch die Membran radial überbrückten Ringspaltes entspricht. Dies stellt sicher, daß die Membran nicht überdehnt und dadurch beschädigt werden kann.

Der in der Steuerkammer im geschlossenen Zustand des Sensorventils durch den Injektor erzeugte Minderdruck ist relativ gering. Um dennoch ein sicheres Umschalten des Steuerventils und ein Verharren des Steuerventils in seiner Funktionsstellung sicherzustellen, sollte das Verhältnis der Fläche, innerhalb derer im sperrenden Zustand des Teller-Sitzventils dessen Dichtkörper mit dem in der Nachfüllwasserleitung herrschenden Druck beaufschlagt ist, zu der wirksamen Querschnittsfläche, innerhalb derer im sperrenden Zustand des Sensorventils der Steuerkolben mit dem in der Steuerkammer herrschenden Druck beaufschlagt ist, zwischen 1/30 und 1/100, vorzugsweise um 1/60 betragen.

Andererseits muß in der Grundstellung des Steuerventils gewährleistet sein, daß das Teller-Sitzventil auch bei Druckschwankungen in der Nachfüllwasserleitung geschlossen bleibt. Daher sollte die dem geöffneten Zustand des Teller-Sitzventils entsprechende maximale Vorspannung der das Sitzventil in dessen Sperrstellung drängenden Ventilfeder dem 1,5- bis 3-fachen Wert der Kraft entsprechen, die aus der Druckbeaufschlagung des Teller-Sitzventilkörpers mit dem in der Nachfüllwasserleitung herrschenden Druck resultiert.

Zur optischen Kontrolle des Betriebszustandes des Steuerventils ist die Kugel des Sensorventils bei einer bevorzugten Ausführungsform in einem ein Steigrohr bildenden Gehäuseteil aus durchsichtigem Material angeordnet.

Im folgenden wird die Erfindung anhand der Zeichnung näher erläutert. Es zeigen
- Fig. 1: eine schematische Darstellung der wesentlichen Funktionselemente einer Wasseraufbereitungsanlage mit einem Ausführungsbeispiel des erfindungsgemäßen Steuerventils in der Betriebsphase des Ionenaustauschers;
- Fig. 2: eine der Fig. 1 entsprechende Darstellung der Wasseraufbereitungsanlage in der Besalzungsphase des Ionenaustauschers;
- Fig. 3: eine der Fig. 1 entsprechende Darstellung der Wasseraufbereitungsanlage in der Auswaschphase des Ionenaustauschers und Nachfüllphase des Salzlösebehälters und
- Fig. 4: eine der Fig. 1 entsprechende Darstellung der Wasseraufbereitungsanlage in der Rückspülphase des Ionenaustauschers.

Die in der Zeichnung schematisch dargestellte Wasseraufbereitungsanlage weist als wesentliche Funktionselemente eine Druckwasserquelle 10, einen Salzlösebehälter 12, einen Ionenaustauscher 14, einen nach dem Wasserstrahlpumpenprinzip arbeitenden Injektor 16 sowie ein zwischen den unterschiedlichen Betriebszuständen der Wasseraufbereitungsanlage umschaltendes Steuerventil 18 auf.

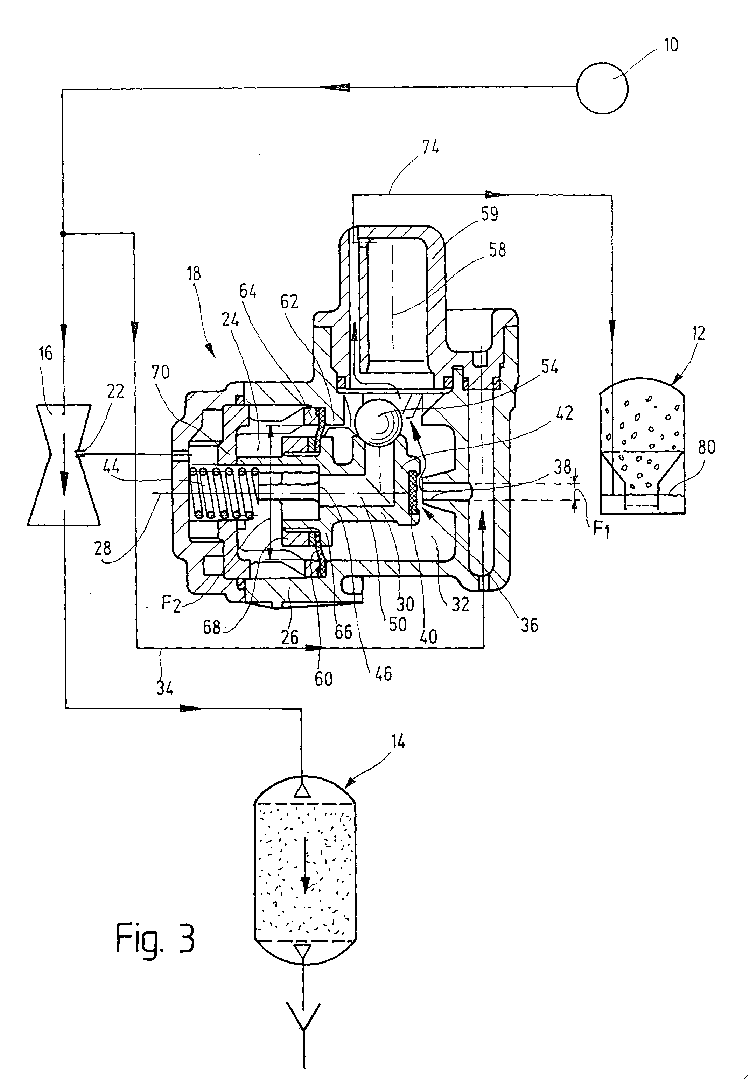

Das Steuerventil 18 ist als druckgesteuertes Ventil ausgebildet, das durch Druckerniedrigung in der an den Injektionseingang 22 angeschlossenen Steuerkammer 24 von seiner Grundstellung in die dem Nachfüllbetrieb des Salzlösebehälters 12 zugeordnete Funktionsstellung (Fig. 3) umschaltbar ist. Die Steuerkammer 24 ist durch einen gegenüber dem Ventilgehäuse 26 abgedichteten, in diesem entlang einer zentralen Gehäuseachse 28 hin- und herverschiebbaren Steuerkolben 30 beweglich gegen eine Eingangskammer 32 des Ventils abgesperrt. Der Salzlösebehälter 12 ist direkt und die Nachfüllwasserleitung 34 über ein 2/2-Wege-Sitzventil 36 an die Eingangskammer 32 angeschlossen. Das 2/2-Wege-Sitzventil 36 ist als Teller-Sitzventil ausgebildet, dessen Sitz durch die schmale Ringstirnfläche einer außenkonischen, in die Eingangskammer 32 hineinragenden Ringrippe 38 gebildet ist. Der Ventilkörper des Teller-Sitzventils 36 ist eine elastische Kreisscheibe 40, die in eine flach-topfförmige Vertiefung des einlaßkammerseitigen Endabschnitts 42 des Steuerkolbens 30 eingesetzt ist. Die elastische Kreisscheibe 40 wird durch eine Ventilfeder 44 in dichtende Anlage mit dem Ventilsitz 38 gedrängt.

Der Steuerkolben 30 ist mit einem sich zwischen einer steuerkammerseitigen Mündungsöffnung 46 und einer eingangskammerseitigen Mündungsöffnung 48 erstreckenden Durchgangskanal 50 versehen. Für das Steuerventil 18 ist eine Montageposition vorgesehen, in der der Durchgangskanal 50 des Steuerkolbens 30 mit nach oben weisendem, lotrechtem Verlauf in die Eingangskammer 32 mündet. Der steuerkammerseitige Mündungsabschnitt des Durchgangskanals 50 schließt rechtwinklig an den eingangskammerseitigen Mündungsabschnitt des Durchgangskanals an und ist koaxial zur zentralen Längsachse 28 des Ventilgehäuses 26 angeordnet.

Das Steuerventil 18 weist ein weiteres, als Sensorventil ausgebildetes 2/2-Wege-Ventil auf, welches auf den Füllstand der Eingangskammer 32 des Steuerventils anspricht und bei Unterschreiten eines Mindestbetrages des Füllstandes in eine den Durchgangskanal 50 des Steuerkolbens 30 sperrende Funktionsstellung gelangt. Das Sensorventil ist als Kugelsitzventil ausgebildet, dessen Ventilsitz 52 durch einen konischen Rand der eingangskammerseitigen Mündungsöffnung 48 des Durchgangskanals 50 des Steuerkolbens 30 gebildet ist. Die Ventilkugel 54 des Kugelsitzventils ist als Schwimmkörper ausgebildet, der in dem Gehäuse 26 entlang einer annähernd koaxial mit der zentralen Achse 56 des Mündungsabschnittes des Durchgangskanals 50 verlaufenden Achse 58 beweglich geführt ist. Zur optischen Kontrolle des Betriebszustandes des Steuerventils 18 ist die Ventilkugel 54 in einem ein kurzes Steigrohr bildenden Gehäuseteil 59 aus durchsichtigem Material angeordnet.

Zur beweglich dichten Abgrenzung der Steuerkammer 24 und der Eingangskammer 32 des Steuerventils 18 gegeneinander ist eine ringscheibenförmige Membran 60 aus nachgiebigem, gummielastischem Kunststoffmaterial vorgesehen. Der radial äußere Rand der Membran 60 ist zwischen einer innenradialen Stufe 62 des Ventilgehäuses 26 und einem in dieses eingesetzten Klemmkörper 64 an der Ringschulter dicht anliegend eingeklemmt. Der radial innere Rand der Membran 60 ist zwischen einem radialen Stützflansch 66 des Steuerkolbens 30 und einem an diesem schraubbar geführten Klemmring 68 an dem Stützflansch 66 dichtend anliegend eingespannt. Der radiale Stützflansch 66 des Steuerkolbens 30 verläuft in einem radialen lichten Abstand vom inneren Rand der Gehäuseschulter 62.

Um eine Beschädigung der Membran 60 durch Überdehnung zu verhindern, ist der maximale Öffnungshub des 2/2-Wege-Sitzventils 36 durch Anschlagwirkung zwischen dem Steuerkolben 30 und einem steuerkammerseitigen, fest mit dem Gehäuse 26 verbundenen Anschlagstück 70 auf einen Wert begrenzt, der zwischen 1/5 und 1/3 der radialen Weite des zwischen dem inneren Rand der Gehäuse-Ringschulter 62 und dem äußeren Rand des Stützflansches 66 des Steuerkolbens 30 verbleibenden, durch die Membran 60 radial überbrückten Ringspaltes entspricht.

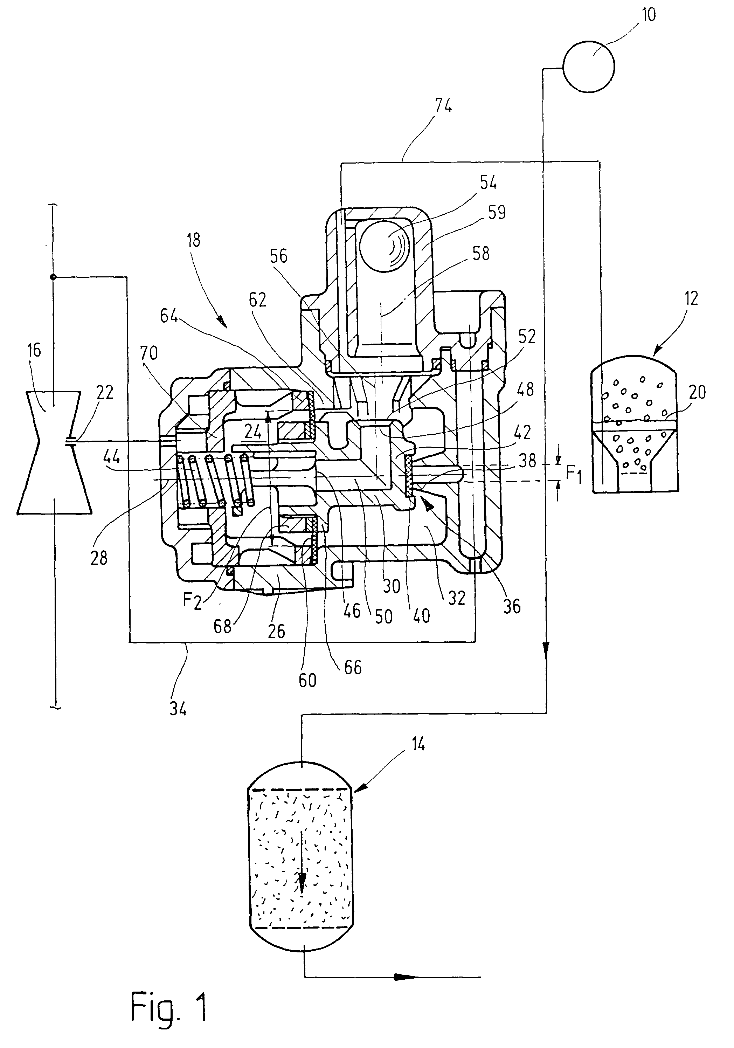

In der Wasseraufbereitungsphase (Fig. 1) wird der Ionenaustauscher 14 von Wasser aus der Druckwasserquelle 10 von oben nach unten durchströmt, das ausgangsseitig einem Verbraucher zugeführt wird. Das Steuerventil 18 befindet sich in Wartestellung in seiner dem Regenerationsbetrieb zugeordneten Grundstellung. Der Injektor 16 ist gegenüber der Druckwasserquelle 10 abgesperrt, während der Salzlösebehälter 12 bis zu einem oberen Füllstand 20 mit Sole befüllt ist.

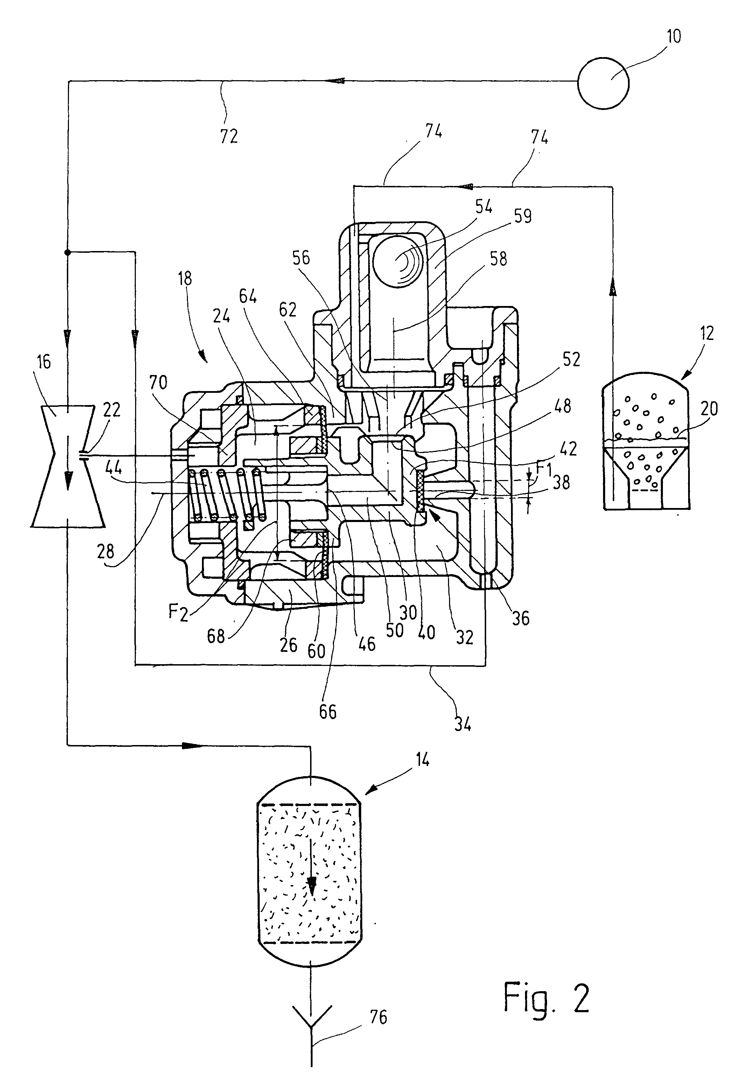

Während des Regenerierungsbetriebs der Wasseraufbereitungsanlage (Fig. 2) ist der Injektor 16 über eine mit der Druckwasserquelle 10 verbundene Leitung 72 mit Druckwasser beaufschlagt, während der Injektionseingang 22 des Injektors 16 über den Durchgangskanal 50 des Steuerkolbens 30 und das geöffnete Kugelsitzventil sowie die Soleleitung 74 mit dem Salzlösebehälter 12 verbunden ist. Das durch den Injektor 16 strömende Treibwasser erzeugt am Injektionseingang 22 einen Minderdruck, so daß durch den im Salzlösebehälter 12 herrschenden Atmosphärendruck Sole durch das Steuerventil 18 hindurch zum Injektionseingang 22 gefördert wird. Dort vermischt es sich mit dem Treibwasser und bildet die für den Regenerationsbetrieb des Ionenaustauschers benötigte verdünnte Sole, die von oben nach unten durch den Ionenaustauscher geleitet und danach einem Abfluß 76 zugeführt wird.

Die Nachfüllwasserleitung 34 ist von der Treibwasserleitung 72 abgezweigt, daher steht bereits beim Besalzen des Ionenaustauschers 14 der relativ hohe Leitungsdruck an dem 2/2-Wege-Sitzventil 36 in Öffnungsrichtung an. Um ein Öffnen des Ventils bereits während der Besalzungsphase zu verhindern, entspricht die maximale Vorspannung der das Sitzventil 36 in dessen Sperrstellung drängenden Ventilfeder 44 dem 1,5- bis 3-fachen Wert der Kraft, die aus der Druckbeaufschlagung des Sitzventils mit dem in der Nachfüllwasserleitung 34 herrschenden Druck resultiert.

Sobald die für die Regenerierung benötigte Solemenge dem Salzlösebehälter 12 entnommen worden ist und dort der untere Füllstand 80 erreicht worden ist (Fig. 3), strömt Luft durch die Soleleitung 74 in die Einlaßkammer 32 des Steuerventils 18 und der dortige Füllstand sinkt soweit ab, bis sich die Ventilkugel 54 auf ihren Ventilsitz 52 setzt und damit den Durchgangskanal 50 eingangskammerseitig verschließt. Das weiterhin durch den Injektor 16 strömende Treibwasser wird nun ohne Solebeimischung durch den Ionenaustauscher 14 geleitet und wäscht dort überschüssiges, von der Regeneration verbliebenes Salz aus. Zugleich hält das Treibwasser den in der Steuerkammer 24 herrschenden Minderdruck aufrecht. Dieser Druck wirkt auf die relativ große Querschnittsfläche F₂ des Steuerkolbens 30 und der Membran 60. Der Druck des Nachfüllwassers wirkt auf die relativ kleine Fläche F₁ (F₂/F₁ etwa 30 bis 100) des durch die Ringrippe 38 gegebenen Querschnitts, so daß die resultierende Kraft allein das Sitzventil 36 entgegen der Kraft der Ventilfeder 44 nicht zu öffnen vermag. Zusammen mit der auf die Fläche F₂ wirkenden Kraft wird die Federkraft derart überkompensiert, daß das Sitzventil 36 entgegen der Kraft der Ventilfeder 44 aus der Sperrstellung in die die Nachfüllwasserleitung 34 mit dem Salzlösebehälter 12 verbindende Öffnungsstellung bewegt wird und auch bei Druckschwankungen des Nachfüllwassers in seiner Öffnungsstellung verbleibt. So kann bereits während des Auswaschens des Ionenaustauschers 14 Nachfüllwasser durch das Steuerventil 18 in den Salzlösebehälter 12 strömen, um die zuvor entnommene Solemenge zu ersetzen. Gleichzeitig wird die Eingangskammer 32 wieder mit Wasser gefüllt.

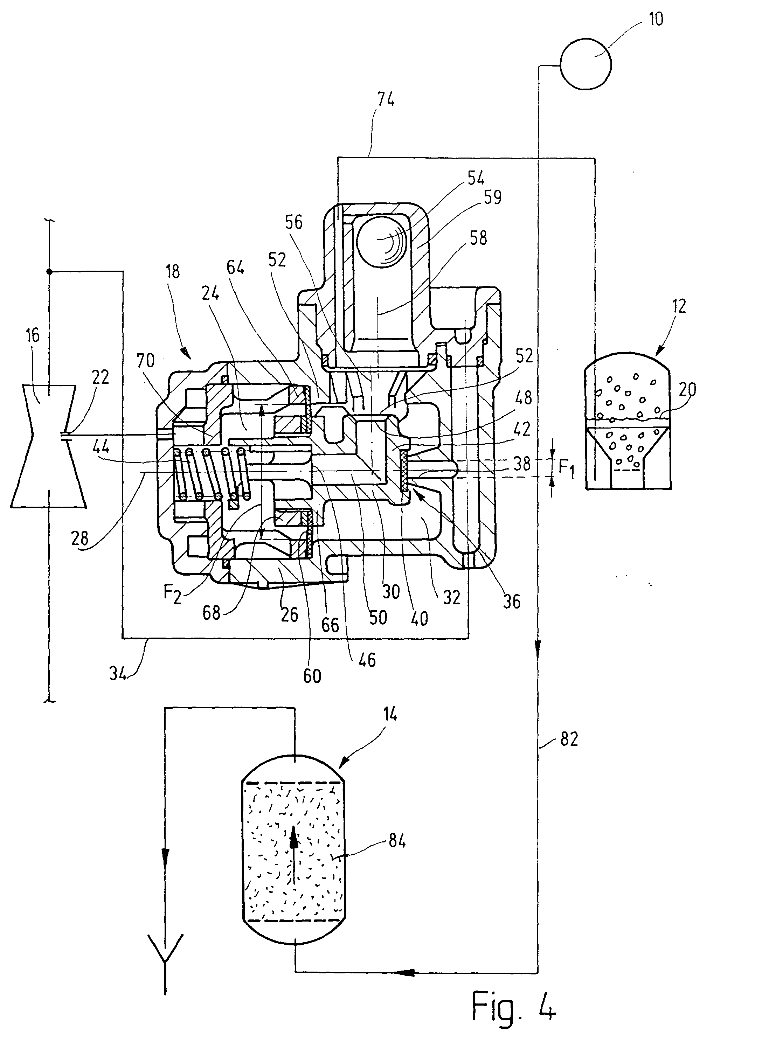

Sobald der Nachfüllvorgang beendet ist, wird die Zufuhr von Treibwasser in den Injektor 16 unterbrochen (Fig. 4), gleichzeitig wird die Nachfüllwasserleitung 34 drucklos. In der Steuerkammer 24 des Steuerventils 18 wird kein Minderdruck mehr erzeugt, so daß die Ventilfeder 44 das Sitzventil 36 schließt. Die Ventilkugel 54 des Sensorventils hebt sich von ihrem Sitz 52 ab und schwimmt im Wasser der Eingangskammer auf und gibt damit die eingangskammerseitige Mündungsöffnung 48 des Durchgangskanals 50 wieder frei. Das Steuerventil 18 befindet sich nun in einer für den nächsten Regeneriervorgang bereiten Stellung. Zugleich wird der Ionenaustauscher 14 über eine Leitung 82 im Gegenstrom von unten nach oben durchströmt und dabei rückgespült, um das Harzbett 84 des Ionenaustauschers aufzulockern und Schwebeteilchen auszuwaschen.

Soweit die Wasseraufbereitungsanlage über einen einzigen Ionenaustauscher 14 verfügt, wird reines Leitungswasser als Treibwasser, als Nachfüllwasser für den Salzlösebehälter 12 und als Rückspülwasser verwendet. Wasseraufbereitungsanlagen mit zwei Ionenaustauschern arbeiten hingegen im Pendelbetrieb, wobei dann von dem sich in Betrieb befindlichen Ionenaustauscher behandeltes Wasser für die oben genannten Zwecke verwendet wird.

Zusammenfassend ist folgendes festzustellen: Die Erfindung betrifft ein Verfahren zum Regenerieren einer nach dem Ionenaustauscherprinzip arbeitenden Wasseraufbereitungsanlage, unter Verwendung einer Einrichtung nach einem der Ansprüche 1 bis 11, bei dem Sole mittels eines Injektors 16 über ein Steuerventil 18 aus einem Salzlösebehälter 12 abgesaugt wird, wobei die Sole mit dem Treibwasser vermischt und dadurch verdünnt wird, die verdünnte Sole mit einem mit Ionenaustauscherharz 84 gefüllten Ionenaustauscher 14 der Wasseraufbereitungsanlage zugeführt wird, anschließend der Ionenaustauscher mit reinem Wasser gespült und/oder im Gegenstrom rückgespült wird, und Nachfüllwasser in den Salzlösebehälter 12 gefüllt wird, sowie eine Einrichtung zur Steuerung des Regenerierungsbetriebes einer mindestens einen Ionenaustauscher 14 umfassenden Wasseraufbereitungsanlage. Bei dem Verfahren wird das Nachfüllwasser unmittelbar im Anschluß an das Absaugen der für den Regenerationsvorgang benötigten Solemenge aus dem Salzlösebehälter 12 während des Auswaschens und/oder Rückspülens des Ionenaustauschers 14 in den Salzlösebehälter 12 eingefüllt.

## Patentansprüche

1. Einrichtung zur Steuerung des Regenerierungsbetriebes einer mindestens einen Ionenaustauscher (14) umfassenden Wasseraufbereitungsanlage, mit einem von Treibwasser durchströmbaren Injektor (16), an dessen Injektionseingang (22) ein einen begrenzten Vorrat gesättigter Sole enthaltender Salzlösebehälter (12) anschließbar ist, durch deren Mischung mit dem den Injektor (16) durchströmenden Treibwasser die für den Regenerierungsbetrieb des Ionenaustauschers (14) benötigte verdünnte Sole gewonnen wird, und mit einem als Umschaltventil ausgebildeten Steuerventil (18), das aus einer dem Regenerierungsbetrieb zugeordneten Grundstellung, in der der Salzlösebehälter (12) mit dem Injektionseingang (22) verbunden, jedoch gegen eine unter definiertem Druck, der höher ist als der Druck im Salzlösebehälter (12), stehende Nachfüllwasserleitung (34) abgesperrt ist, in eine dem Nachfüllbetrieb des Salzlösebehälters (12) zugeordnete Funktionsstellung umschaltbar ist, in der der Injektionseingang (22) gegen den Salzlösebehälter (12) abgesperrt, dieser jedoch mit der Nachfüllwasserleitung (34) verbunden ist, **dadurch gekennzeichnet**,
a) daß das Steuerventil (18) als druckgesteuertes Ventil ausgebildet ist, das durch Druckerniedrigung in einer an den Injektionseingang (22) angeschlossenen Steuerkammer (24) umschaltbar ist,
b) die durch einen gegenüber dem Ventilgehäuse (26) abgedichteten, in diesem entlang einer zentralen Gehäuseachse (28) hin- und herverschiebbaren Steuerkolben (30) beweglich gegen eine Eingangskammer (32) des Ventils abgesperrt ist, an die der Salzlösebehälter (12) direkt und die Nachfüllwasserleitung (34) über ein 2/2-Wege-Sitzventil (36) angeschlossen ist, dessen Ventilkörper durch einen mit dem Steuerkolben (30) fest verbundenen Dichtkörper (40) gebildet ist, der durch die Vorspannung einer an dem Steuerkolben (30) angreifenden Ventilfeder in dichtende Anlage mit dem die Mündungsöffnung eines mit der Nachfüllwasserleitung (34) in Verbindung stehenden Gehäusekanals berandenden Ventilsitz drängbar ist,
c) daß der Steuerkolben (30) mit einem sich zwischen einer steuerkammerseitigen und einer eingangskammerseitigen Mündungsöffnung (46,48) erstreckenden Durchgangskanal (50) versehen ist,
d) und daß ein auf den Füllstand des Salzlösebehälters (12) oder der Eingangskammer (32) des Steuerventils (18) ansprechendes Sensorventil vorgesehen ist, das bei Unterschreiten eines Mindestbetrages des Füllstandes in eine den Durchgangskanal (50) des Steuerkolbens (30) sperrende Funktionsstellung gelangt und in dieser bleibt, solange der Injektor (16) von Treibwasser durchströmt ist.

2. Einrichtung nach Anspruch 1, **dadurch gekennzeichnet, daß** das Sensorventil als Kugelsitzventil ausgebildet ist, dessen Ventilsitz (52) durch einen konischen Rand der eingangskammerseitigen Mündungsöffnung (48) des Durchgangskanals (50) des Steuerkolbens (30) gebildet ist.

3. Einrichtung nach Anspruch 2, **dadurch gekennzeichnet, daß** für das Steuerventil (18) eine Montageposition vorgesehen ist, in der der Durchgangskanal (50) des Steuerkolbens (30) mit nach oben weisendem, vorzugsweise lotrechtem Verlauf in die Eingangskammer (32) des Ventils mündet, und daß die Ventilkugel (54) des Sensorventils als Schwimmkörper ausgebildet ist, der im Gehäuse entlang einer koaxial oder annähernd koaxial mit der zentralen Achse (56) des Mündungsabschnittes des Durchgangskanals verlaufenden Achse (58) geführt beweglich ist.

4. Einrichtung nach Anspruch 3, **dadurch gekennzeichnet, daß** der eingangskammerseitige Mündungsabschnitt des Durchgangskanals (50) des Steuerkolbens (30) rechtwinklig an einen steuerkammerseitigen Mündungsabschnitt des Durchgangskanals (50) anschließt, wobei dieser steuerkammerseitige Mündungsabschnitt koaxial zur zentralen Längsachse (28) des Ventilgehäuses angeordnet ist.

5. Einrichtung nach Anspruch 4, **dadurch gekennzeichnet, daß** das 2/2-Wege-Sitz-Ventil (36), über das die Nachfüllwasserleitung (34) an die Eingangskammer (32) des Steuerventils (18) anschließbar ist, als Teller-Sitzventil ausgebildet ist.

6. Einrichtung nach Anspruch 5, **dadurch gekennzeichnet, daß** der Sitz des Teller-Sitzventils durch die schmale Ringstirnfläche einer außenkonischen, in die Einlaßkammer (32) hineinragenden Ringrippe (38) gebildet ist, und daß der Ventilkörper (40) des Teller-Sitzventils als elastische Kreisscheibe ausgebildet ist, die in eine flach-topfförmige Vertiefung des einlaßkammerseitigen Endabschnitts (42) des Steuerkolbens (30) eingesetzt ist.

7. Einrichtung nach einem der Ansprüche 1 bis 6, **dadurch gekennzeichnet, daß** zur beweglich dichten Abgrenzung der Steuerkammer (24) und der Eingangskammer (32) des Steuerventils (18) gegeneinander eine ringscheibenförmige Membran (60) aus nachgiebigem Kunststoffmaterial vorgesehen ist, deren radial äußerer Rand zwischen einer innenradialen Stufe (62) des Ventilgehäuses (26) und einem in dieses eingesetzten Klemmkörper (64) an der Ringschulter dicht anliegend eingeklemmt ist und deren radial innerer Rand zwischen einem radialen Stützflansch (66) des Steuerkolbens (30) und einem an diesem schraubbar geführten Klemmring (68) an dem Stützflansch (66) dichtend anliegend eingespannt ist, wobei der radiale Stützflansch (66) des Steuerkolbens (30) in einem radialen lichten Abstand vom inneren Rand der Gehäuseschulter verläuft.

8. Einrichtung nach Anspruch 7, **dadurch gekennzeichnet, daß** der maximale Öffnungshub des 2/2-Wege-Sitz-Ventils (36) durch Anschlagwirkung zwischen dem Steuerkolben (30) und dem Gehäuse (26) oder eines mit diesem fest verbundenen Anschlagstückes (70) auf einen Wert begrenzt ist, der zwischen 1/5 und 1/3 der radialen Weite des zwischen dem inneren Rand der Gehäuse-Ringschulter (62) und dem äußeren Rand des Stützflanschs (66) des Steuerkolbens (30) verbleibenden, durch die Membran (60) radial überbrückten Ringspaltes entspricht.

9. Einrichtung nach Anspruch 7 oder 8, **dadurch gekennzeichnet, daß** das Verhältnis (F₁/F₂) der Fläche F₁, innerhalb derer im sperrenden Zustand des Teller-Sitz-Ventils (36) dessen Dichtkörper (40) mit dem in der Nachfüllwasserleitung (34) herrschenden Druck beaufschlagt ist, zu der wirksamen Querschnittsfläche F₂, innerhalb derer im sperrenden Zustand des Sensorventils der Steuerkolben (30) mit dem in der Steuerkammer (34) herrschenden Druck beaufschlagt ist, zwischen 1/30 und 1/100, vorzugsweise um 1/60 beträgt.

10. Einrichtung nach Anspruch 9, **dadurch gekennzeichnet, daß** die dem geöffneten Zustand des Teller-Sitz-Ventils (36) entsprechende maximale Vorspannung der das Sitzventil in dessen Sperrstellung drängenden Ventilfeder (44) dem 1,5- bis 3-fachen Wert der Kraft entspricht, die aus der Druckbeaufschlagung des Teller-Sitz-Ventilkörpers mit dem in der Nachfüllwasserleitung (34) herrschenden Druck resultiert.

11. Einrichtung nach einem der Ansprüche 3 bis 10, **dadurch gekennzeichnet, daß** die Kugel (54) des Sensorventils in einem ein kurzes Steigrohr bildenden Gehäuseteil (54) aus durchsichtigem Material angeordnet ist.

12. Verfahren zum Regenerieren einer nach dem Ionenaustauscherprinzip arbeitenden Wasseraufbereitungsanlage unter Verwendung einer Einrichtung nach einem der Ansprüche 1 bis 11, bei dem Sole mittels eines Injektors (16) über ein Steuerventil (18) aus einem Salzlösebehälter (12) abgesaugt wird, wobei die Sole mit dem Treibwasser vermischt und dadurch verdünnt wird, die verdünnte Sole einem mit Ionenaustauscherharz (84) gefüllten Ionenaustauscher (14) der Wasseraufbereitungsanlage zugeführt wird, anschließend der Ionenaustauscher mit reinem Wasser gespült und/oder im Gegenstrom rückgespült wird, und Nachfüllwasser in den Salzlösebehälter (12) gefüllt wird, **dadurch gekennzeichnet, daß** das Nachfüllwasser unmittelbar im Anschluß an das Absaugen der für den Regenerationsvorgang benötigten Solemenge aus dem Salzlösebehälter (12) während des Auswaschens und/oder Rückspülens des Ionenaustauschers (14) in den Salzlösebehälter (12) eingefüllt wird.

13. Verfahren nach Anspruch 12, **dadurch gekennzeichnet, daß** das Nachfüllwasser durch die gleiche Leitung (74) in den Salzlösebehälter (12) gefüllt wird, über die die Sole abgesaugt wird.

14. Verfahren nach Anspruch 12 oder 13, **dadurch gekennzeichnet, daß** in einer zwei parallel zueinander angeordnete, jeweils abwechselnd arbeitende Ionenaustauscher (14) aufweisenden Wasseraufbereitungsanlage von dem jeweils sich in Betrieb befindlichen Ionenaustauscher (14) behandeltes Wasser als Treibwasser für den Injektor (16), für das Auswaschen des zu regenerierenden Ionenaustauschers (14), für das Nachfüllen des Salzlösebehälters (12) und gegebenenfalls für das Rückspülen des zu regenerierenden Ionenaustauschers verwendet wird.

## Claims

1. A device for controlling the regeneration process of a water treating apparatus having at least one ion exchanger (14), comprising an injector (16) adapted for cross-flow of motive water, to an injection input (22) of which a brine container (12) containing an amount of saturated brine, which is mixed with the motive water flowing through the injector (16) to produce the diluted brine necessary for the regeneration of the ion exchanger (14), can be coupled, and comprising a control valve (18) designed to be a switching valve, which is adapted to be switched from a normal position assigned to the regeneration process, in which the brine container (12) is connected to the injector input (22) but is shut off with respect to a refill water conduit (34) which is pressurized to a defined pressure that is higher than the pressure in the brine container (12), to a position assigned to the refilling operation of the brine container (12), in which the injector input (22) is shut off with respect to the brine container (22) but this is connected to the refill water conduit (34),
**characterized in that**
a) the control valve (18) is designed to be a pressure controlled valve, which is adapted to be switched by a pressure reduction in a control chamber (24) connected to the injector input (22),
b) which control chamber (24) is shut off with respect to an input chamber (32) of the valve by means of a control piston (30) which is sealed with respect to the valve housing (26) and reciprocally movable therein along a central housing axis (28), to which input chamber the brine container (12) is connected directly and the refill water conduit is connected by means of a 2/2-way-seat valve (36), the valve body of which is formed by a sealing element (40) rigidly coupled to the control piston (30), which sealing element is adapted to be forced into a sealing contact with the opening, the edge portion of which forms a valve seat, of a housing channel communicating with the refill water conduit by means of the tension of a valve spring acting on the control piston (30),
c) that the control piston (30) is provided with a continuous channel (50) which extends between openings (46, 48) at the control chamber side and the input chamber side thereof,
d) and that a sensor valve is provided, which responds to the fill level of the brine container (12) or the input chamber (32) of the control valve (18) and which switches into an operating position in which the continuous channel (50) of the control piston (30) is shut off when the fill level falls below a minimum value and remains **in that** position as long as motive water flows through the injector (16).

2. The device of claim 1, **characterized in that** the sensor valve is designed to be a ball valve, the valve seat (52) is formed by a conical edge of the opening (48) at the input chamber side of the continuous channel (50) of the control piston (30).

3. The device of claim 2, **characterized in that** a mounting position is provided for the control valve (18) in which the continuous channel (50) of the control piston (30) is arranged such that it opens upwardly oriented, preferably vertically into the input chamber (32) of the valve, and that the valve ball (54) of the sensor valve is formed to be a float element which is movably guided in the housing along an axis (58) which is coaxial or essentially coaxial with respect to the central axis (56) of the opening portion of the continuous channel.

4. The device of claim 3, **characterized in that** the opening portion at the input chamber side of the continuous channel (50) of the control piston (30) is connected at a right angle to an opening portion at the control chamber side of the continuous channel (50), which opening portion at the control chamber side is arranged coaxially with respect to the central longitudinal axis (28) of the valve housing.

5. The device of claim 4, **characterized in that** the 2/2-way-seat valve (36), by means of which the refill water conduit (34) is adapted to be connected to the input chamber (32) of the control valve (18), is formed to be a disc valve.

6. The device of claim 5, **characterized in that** the valve seat of the disc valve is formed by the narrow annular face of an outwardly conical annular rib (38) which protrudes into the input chamber (32), and that the valve body (40) of the disc valve is formed to be an elastic circular element which is disposed in a flat cup-shaped recess of the end portion (42) at the input chamber side of the control piston (30).

7. The device of one of claims 1 to 6, **characterized in that** an annular membrane (60) made of an elastic plastic material is provided for movably sealing the control chamber (24) and the input chamber (32) of the control valve (18) from each other, the radially outer edge of which membrane is clamped between an inner radial step (62) of the valve housing (26) and a clamping member (64) disposed therein such that it lies tight against the annular shoulder and the radially inner edge of which is clamped between a radial support flange (66) of the control piston (30) and a clamping ring (68) screwed thereon such that it lies tight against the support flange (66), wherein the radial support flange (66) of the control piston (30) is radially spaced with respect to the inner edge of the housing shoulder.

8. The device of claim 7, **characterized in that** the maximum opening stroke of the 2/2-way-seat valve (36) is limited, by way of a stop action between the control piston (30) and the housing (26) or a stop member (70) rigidly attached thereto, to a value that corresponds to 1/5 to 1/3 of the radial spacing of the annular gap between the inner edge of the annular shoulder (62) of the housing and the outer edge of the support flange (66) of the control piston (30), which gap is radially bridged by the membrane (60).

9. The device of claim 7 or 8, **characterized in that** the ratio (F₁/F₂) of the area F₁, at which the valve body (40) of the disc valve is subjected to the pressure in the refill water conduit in the shut-off position of the disc valve (36), to the effective cross sectional area F₂, at which the control piston (30) is subjected to the pressure inside the control chamber (34) in the shut-off position of the sensor valve, is between 1/30 and 1/100, preferably approximately 1/60.

10. The device of claim 9, **characterized in that** the maximum tension, corresponding to the open position of the disc valve (36), of the valve spring (44) which forces the disc valve into its shut-off position corresponds to 1.5 to 3 times the value of the force which results from the disc valve member being subjected to the pressure in the refill water conduit (34).

11. The device of one of claims 3 to 10, **characterized in that** the ball (54) of the sensor valve is disposed inside a housing part (59), which forms a short riser pipe, made of transparent material.

12. A method for regenerating a water treatment apparatus relying on the ion exchange technique and making use of a device according to one of claims 1 to 11, in which brine is sucked out of a brine container (12) through a control valve (18) by means of an injector (16), wherein the the brine is mixed with the motive water and thereby diluted, wherein the diluted brine is fed to an ion exchanger (14) of the water treatment apparatus which is filled with an ion exchanger resin (84), following which the ion exchanger is washed and/or backwashed with clean water, and wherein refill water is then filled into the brine container (12), **characterized in that** the refill water is filled into the brine container (12) immediately after the brine needed for the regeneration process is sucked out of the brine container (12) and while the ion exchanger (14) is washed and/or backwashed.

13. The method of claim 12, **characterized in that** the refill water is filled into the brine container (12) through the same conduit (74) through which the brine is sucked off.

14. The method of claim 12 or 13, **characterized in that** in a water treatment apparatus comprising two parallel, alternately used ion exchangers (14) water treated by the currently functioning ion exchanger (14) is used as motive water for the injector (16), for washing the ion exchanger (14) being regenerated, for refilling the brine container (12), and possibly for backwashing the ion exchanger being regenerated.

## Revendications

1. Dispositif pour commander le mode régénération d'une installation de traitement d'eau englobant au moins un échangeur d'ions (14), comprenant un injecteur (16) pouvant être parcouru par de l'eau d'entraînement, à l'entrée d'injection (22) duquel peut être raccordé un récipient (12) de lixiviation de sels renfermant une réserve limitée de saumure saturée qui, mélangée à l'eau d'entraînement circulant par l'injecteur (16), permet d'obtenir la saumure diluée nécessaire au mode régénération de l'échangeur d'ions (14) ; et une vanne de commande (18) réalisée sous la forme d'un distributeur pouvant être commuté d'une position de base, affectée au mode régénération, dans laquelle le récipient (12) de lixiviation des sels est relié à l'entrée d'injection (22), mais est toutefois isolé vis-à-vis d'un conduit (34) d'eau de post-remplissage soumis à une pression bien définie, supérieure à la pression régnant dans ledit récipient (12) de lixiviation des sels, à une position fonctionnelle affectée au mode post-remplissage du récipient (12) de lixiviation des sels, dans laquelle l'entrée d'injection (22) est isolée vis-à-vis dudit récipient (12) de lixiviation des sels, mais celui-ci est néanmoins relié au conduit (34) d'eau de post-remplissage, **caractérisé par** le fait
e) que la vanne de commande (18) est réalisée sous la forme d'une vanne pilotée par pression, qui peut être commutée par abaissement de la pression régnant dans une chambre de commande (24) raccordée à l'entrée d'injection (22) et
f) isolée de façon mobile vis-à-vis d'une chambre d'entrée (32) de la vanne, par l'intermédiaire d'un piston de commande (30) rendu étanche par rapport au carter (26) de ladite vanne et pouvant aller et venir par coulissement, dans ce dernier, le long d'un axe médian (28), le récipient (12) de lixiviation des sels et le conduit (34) d'eau de post-remplissage étant respectivement raccordés, à ladite chambre d'entrée, par voie directe et par l'intermédiaire d'une soupape (36) à siège du type 2/2 dont le corps obturateur est formé par un corps d'étanchement (40) qui est relié rigidement au piston de commande (30) et peut être poussé à force, par la précontrainte d'un ressort obturateur venant en prise avec ledit piston de commande (30), en contact étanche avec le siège d'obturation marquant la délimitation marginale de l'orifice d'embouchure d'un canal parcourant le carter et communiquant avec le conduit (34) d'eau de post-remplissage ;
g) que le piston de commande (30) est pourvu d'un canal de passage (50), s'étendant entre des orifices d'embouchure (46, 48) respectivement disposés du côté de la chambre de commande et du côté de la chambre d'entrée ;
h) et qu'il est prévu une soupape de détection qui réagit au niveau d'emplissage du récipient (12) de lixiviation des sels ou de la chambre d'entrée (32) de la vanne de commande (18) et qui parvient, en cas de dépassement négatif d'une valeur minimale dudit niveau d'emplissage, à une position fonctionnelle bloquant le canal de passage (50) du piston de commande (30), position dans laquelle elle demeure aussi longtemps que l'injecteur (16) est parcouru par de l'eau d'entraînement.

2. Dispositif selon la revendication 1, **caractérisé par le fait que** la soupape de détection est conçue comme une soupape à siège sphérique, dont le siège d'obturation (52) est formé par un bord tronconique de l'orifice d'embouchure (48), situé du côté de la chambre d'entrée, du canal de passage (50) du piston de commande (30).

3. Dispositif selon la revendication 2, **caractérisé par le fait qu'**il est prévu, pour la vanne de commande (18), une position de montage dans laquelle le canal de passage (50) du piston de commande (30) débouche, dans la chambre d'entrée (32) de ladite vanne, avec tracé orienté vers le haut, préférentiellement dans le sens vertical ; et **par le fait que** la bille obturatrice (54) de la soupape de détection se présente comme un flotteur guidé avec mobilité, dans le carter, le long d'un axe (58) s'étendant coaxialement ou à peu près coaxialement à l'axe médian (56) de la région d'embouchure dudit canal de passage.

4. Dispositif selon la revendication 3, **caractérisé par le fait que** la région de l'embouchure du canal de passage (50) du piston de commande (30), qui est située du côté de la chambre d'entrée, se rattache perpendiculairement à une région d'embouchure dudit canal de passage (50) qui est située du côté de la chambre de commande, cette région d'embouchure, située du côté de la chambre de commande, occupant une position coaxiale à l'axe médian longitudinal (28) du carter de la vanne.

5. Dispositif selon la revendication 4, **caractérisé par le fait que** la soupape (36) à siège du type 2/2, par l'intermédiaire de laquelle le conduit (34) d'eau de post-remplissage peut être raccordé à la chambre d'entrée (32) de la vanne de commande (18), est conçue comme une soupape à siège discoïdal.

6. Dispositif selon la revendication 5, **caractérisé par le fait que** le siège de la soupape à siège discoïdal est formé par l'étroite face extrême annulaire d'une nervure annulaire (38) extérieurement tronconique, s'engageant dans la chambre d'admission (32) ; et **par le fait que** le corps obturateur (40) de ladite soupape à siège discoïdal se présente comme un disque circulaire élastique encastré dans un renfoncement, en forme de cuvette aplatie, de la région extrême (42) du piston de commande (30) qui est située du côté de la chambre d'admission.

7. Dispositif selon l'une des revendications 1 à 6, **caractérisé par le fait que**, pour délimiter mutuellement de manière étanche, avec mobilité, la chambre de commande (24) et la chambre d'entrée (32) de la vanne de commande (18), il est prévu une membrane (60) en forme de disque annulaire consistant en une matière plastique souple, dont le bord radialement extérieur est enserré, entre un gradin (62) radialement intérieur du carter (26) de ladite vanne, et un corps de coincement (64) intégré dans ledit carter, avec contact à plat étanche sur l'épaulement annulaire, et dont le bord radialement intérieur est enchâssé entre une aile radiale d'appui (66) du piston de commande (30) et une bague de coincement (68), guidée par vissage sur ledit piston, avec contact à plat étanche sur ladite aile d'appui (66), l'aile radiale d'appui (66) du piston de commande (30) s'étendant avec espacement intérieur radial vis-à-vis du bord intérieur de l'épaulement du carter.

8. Dispositif selon la revendication 7, **caractérisé par le fait que** la course maximale d'ouverture de la soupape (36) à siège du type 2/2 est limitée, par effet de venue en butée entre le piston de commande (30) et le carter (26), ou une pièce d'arrêt (70) reliée rigidement audit carter, à une valeur correspondant à entre 1/5 et 1/3 de la largeur radiale de l'interstice annulaire comblé par la membrane (60) dans le sens radial, et subsistant entre le bord intérieur de l'épaulement annulaire (62) du carter et le bord extérieur de l'aile d'appui (66) du piston de commande (30).

9. Dispositif selon la revendication 7 ou 8, **caractérisé par le fait que** le rapport (F₁/F₂) est compris entre 1/30 et 1/100 et est, de préférence, de 1/60 entre la superficie F₁ dans les limites de laquelle, à l'état bloquant de la soupape (36) à siège discoïdal, le corps d'étanchement (40) de cette dernière est sollicité par la pression régnant dans le conduit (34) d'eau de post-remplissage, et la superficie F₂ de la section transversale efficace dans les limites de laquelle, à l'état bloquant de la soupape de détection, le piston de commande (30) est sollicité par la pression régnant dans la chambre de commande (34).

10. Dispositif selon la revendication 9, **caractérisé par le fait que** la précontrainte maximale du ressort obturateur (44) poussant la soupape à siège vers sa position de blocage, qui concorde avec l'état ouvert de la soupape (36) à siège discoïdal, correspond à entre 1,5 et 3 fois la valeur de la force résultant de la sollicitation, par la pression régnant dans le conduit (34) d'eau de post-remplissage, du corps obturateur associé au siège discoïdal.

11. Dispositif selon l'une des revendications 3 à 10, **caractérisé par le fait que** la bille (54) de la soupape de détection est logée dans une partie de boîtier (59) en un matériau translucide, formant un court tube ascendant.

12. Procédé de régénération d'une installation de traitement d'eau fonctionnant selon le principe d'échange d'ions, en utilisant un dispositif conforme à l'une des revendications 1 à 11, procédé dans lequel de la saumure est aspirée au moyen d'un injecteur (16), par l'intermédiaire d'une vanne de commande (18), à partir d'un récipient (12) de lixiviation de sels ; ladite saumure est mélangée à l'eau d'entraînement, en étant ainsi diluée ; la saumure diluée est délivrée à un échangeur d'ions (14) de l'installation de traitement d'eau, empli d'une résine (84) échangeuse d'ions ; l'échangeur d'ions est ensuite nettoyé et/ou rincé à contre-courant par de l'eau pure ; et de l'eau de post-remplissage est déversée dans le récipient (12) de lixiviation des sels, **caractérisé par le fait que** l'eau de post-remplissage est déversée dans le récipient (12) de lixiviation des sels au cours du lavage et/ou du rinçage à contre-courant de l'échangeur d'ions (14), dans l'enchaînement direct de l'aspiration, hors dudit récipient (12) de lixiviation des sels, de la quantité de saumure nécessaire au processus de régénération.

13. Procédé selon la revendication 12, **caractérisé par le fait que** l'eau de post-remplissage est déversée, dans le récipient (12) de lixiviation des sels, par l'intermédiaire du même conduit (74) que celui par l'intermédiaire duquel la saumure est aspirée.

14. Procédé selon la revendication 12 ou 13, **caractérisé par le fait que**, dans une installation de traitement d'eau équipée de deux échangeurs d'ions (14) agencés parallèlement l'un à l'autre et fonctionnant, respectivement, en mode alterné, de l'eau traitée, provenant de l'échangeur d'ions (14) respectivement en service, est utilisée en tant qu'eau destinée à l'entraînement de l'injecteur (16), au lavage de l'échangeur d'ions (14) à régénérer, au post-remplissage du récipient (12) de lixiviation des sels et, le cas échéant, au rinçage à contre-courant de l'échangeur d'ions à régénérer.
